# EUROPÄISCHE PATENTANMELDUNG

(11) **EP 2 104 173 A1**
(43) Veröffentlichungstag der Anmeldung: **23.09.2009**
(21) Anmeldenummer: 06849656.1
(22) Anmeldetag: 26.12.2006
(51) Int. Cl.: H01M 10/34

(54) **GASDICHTE NICKEL-CADMIUM-SPEICHERBATTERIE**

(30) Priorität: 12.09.2006 RU 2006133210
(71) Anmelder: Shapot, Mikhail Borisovich, St.Petersburg 197-002 (RU); Uzhinov, Boris Ivanovich, St.Petersburg 196-605 (RU)
(72) Erfinder: ARDABATSKY, Vladimir Petrovich, St.Petersburg 105-197 (RU); STOLYARSKAYA, Odda Abramovna, St.Petersburg 199-155 (RU)
(74) Vertreter: Schneider, Henry
(86) Internationale Anmeldenummer: PCT/RU2006/000707
(87) Internationale Veröffentlichungsnummer: WO 2008/033050

(57) **Zusammenfassung**

Die Erfindung bezieht sich auf den Bereich der Elektrotechnik und insbesondere auf chemische Elektrostromquellen.

Dichter Nickel-Kadmium-Akkumulator enthält ein Gefäß, einen Deckel, positive Nickelelektroden und negative Kadmiumelektroden mit dem Übermaß der Aufnahmefähigkeit im Vergleich zu der Aufnahmefähigkeit der Nickelelektroden, einen Separator, einen alkalischen Elektrolyt und eine Sauerstoffelektrode aus A-Kohle, die elektrisch mit der Kadmiumelektrode verbunden ist; die Sauerstoffelektrode ist in ihrer Länge aus zwei oder mehreren Teilen ausgebildet, dabei besteht jeder Teil aus zwei Platten, zwischen denen ein hydrophiler Faserwerkstoff angeordnet ist, und diese Teile voneinander mit Gitterelementen aus dem Elektroisolationswerkstoff abgetrennt sind, die Dicke des hydrophilen Faserwerkstoffes beträgt 0,25 - 1,0 und die Dicke des Gitterelementes 1,0 - 4,0 von der Dicke der Platte des Sauerstoffelektrodenteiles, dabei ist die Sauerstoffelektrode in dem oberen Teil des Akkumulators angeordnet und in den Elektrolyt mit ihrem unteren Teil auf 0,1 - 0,8 ihrer Höhe eingetaucht; die Kadmiumelektrode ist mit dem Übermaß der Aufnahmefähigkeit von 75 bis 100 % im Vergleich zu der Aufnahmefähigkeit der Nickelelektrode ausgebildet.

Als Ergebnis wird die Effizienz des Sauerstoffsaufsaugens durch die Elektrode aus der A-Kohle erhöht und der interne Druck in dem Gefäß reduziert; ferner wird die Aufgabe der Verhinderung der Wasserstoffabscheidung auf der Kadmiumelektrode gelöst.

## Beschreibung

### Technikbereich

Die Erfindung bezieht sich auf den Bereich der Elektrotechnik und insbesondere auf chemische Elektrostromquellen.

### Bekannter Stand der Technik

Es ist ein dichter alkalischer Akkumulator bekannt, der ein Gefäß, einen Deckel mit Stopfen und Bornen, positive Nickeloxidelektroden, negative doppelte Kadmium-Elektroden mit einer größeren Kapazität im Vergleich zu der Kapazität der Nickeloxidelektroden, einen Separator und einen Elektrolyt enthält. Der Akkumulator ist mit einer isolierten Kammer, die dicht mit dem Elektrolyt des Akkumulators verbunden ist, beispielsweise mit Hilfe von einem Rohr, ausgestattet und die doppelten Kadmium-Elektroden haben ein freies Spiel untereinander. Die isolierte Kammer ist außerhalb des Akkumulators oder in dem Akkumulator untergebracht; die isolierte Kammer ist aus einem elastischen, alkalibeständigen Werkstoff in Form eines zusammenfaltbaren Balges hergestellt. Die isolierte Kammer kann in Form eines geschlossenen Gefäßes mit harten Wänden hergestellt und mit einem Rohr versehen werden, wobei das eine Ende dieses Rohres neben dem Boden angeordnet ist, RU 2112301 C1.

Dieser Akkumulator hat aber folgende Nachteile: ein geringer Kapazitätsüberschuss der Kadmiumelektrode im Vergleich zu der Kapazität der positiven Nickelelektrode während der langen Akkumulatoraufladung lässt einen solchen Zustand zu, bei dem auf der Kadmiumelektrode mit dem Erreichen des Wasserstoffabscheidungs-Potenzials darauf der Wasserstoff abgeschieden wird, wobei an der positiven Elektrode Sauerstoff auftritt. Das Fehlen einer zusätzlichen Sauerstoffelektrode erzwingt das Schaffen zusätzlicher Ausgleichsgefäße zur Aufnahme der sich bei der Akkumulatorladung abscheidenden Gase; solch eine Konstruktion erfordert zur Gewährleistung der Dichtheit des Akkumulators zusätzliche Arbeitsvolumen für die Aufnahme der Gase, was seine spezifische Energiecharakteristika reduziert; der in den Ausgleichsgefäßen entstehende Überdruck schränkt den Anwendungsbereich der Akkumulatoren diesen Typs wegen der konstruktiven Eingrenzung des zulässigen Gasdrucks in den Gefäßen ein.

Es ist ein Knallgaszellen-(Luft-)Brennstoffakkumulator (WKTEA) bekannt, der eine Wasserstoffgasdiffusionselektrode mit einer Wasserstoffkammer, einer Sauerstoff- (Luft-)Gasdiffusionselektrode mit einer Sauerstoff- (Luft-)Kammer und einen Elektrolyt, der zwischen der Wasserstoff- und Sauerstoff- (Luft-)Elektrode angeordnet ist, enthält; die Wasserstoffelektrode enthält eine Metallhydridlegierung, zwischen der Wasserstoff- und Sauerstoff-(Luft-)Elektrode ist eine Nickeloxidelektrode angeordnet, und als Elektrolyt wird ein alkalisches Elektrolyt eingesetzt; die Nickeloxidelektrode ist von der Wasserstoff- und Sauerstoff-(Luft-)Elektrode durch Separatoren abgetrennt; die Nickeloxidelektrode ist mit der Möglichkeit eines elektrischen Anschlusses an der Sauerstoff-(Luft-)Elektrode ausgebildet; die Nickeloxidelektrode ist elektrisch an die Sauerstoff-(Luft-)Elektrode mit Hilfe eines Schalters angeschlossen, RU 2204183 C1.

Dabei ergeben sich folgende Nachteile dieser Analogielösung: Aufnahme des Sauerstoffes, der auf der positiven Elektrode während deren Aufladung abgeschieden wird, erfolgt durch die Gasdiffusionselektrode, die zwischen der Nickeloxidelektrode und Metallhydridelektrode angeordnet ist und vollständig in den Elektrolyt eingetaucht ist, was die Effizienz der Sauerstoffaufnahme reduziert und den Innen-Widerstand der Stromquelle erhöht; der Anschluss der Sauerstoffelektrode an die Nickeloxidelektrode reduziert die Effizienz der Arbeit der Sauerstoffelektrode wegen der Nähe der Potentiale beider Elektroden; die Vergrößerung der Dicke der Arbeitselektroden senkt die spezifische Energiecharakteristika des Akkumulators insgesamt herab.

Es ist auch ein dichter alkalischer Akkumulator mit den Sauer- und Wasserstoffverbundelektroden bekannt, GB 1219482. Der Nachteil dieses Akkumulators besteht darin, dass die Elektroden keinen direkten Kontakt zu dem Elektrolyt in dem Akkumulator haben, sondern nur den Kontakt mit dem Separator, der mit dem Elektrolyt benetzt ist, was die Leistungs-Effizienz der Elektroden wegen des hohen Innen-Widerstandes des elektrischen Stromkreises wesentlich herabsenkt, wobei dieser Widerstand unter anderem auch von dem Grad der Benetzbarkeit des Separators mit dem Elektrolyt während der Lebensdauer des Akkumulators abhängt. Außerdem führt der verhinderte Abtransport des gebildeten Wassers auf den Elektroden zur Verdünnung des Elektrolyts in den Separator-Poren, und lässt den Widerstand des Stromkreises noch weiter ansteigen, und dementsprechend reduziert sich auch zusätzlich die Effizienz des Elektrodenbetriebes.

Es ist ein dichter Nickel-Kadmium-Akkumulator bekannt, der ein Gefäß, einen Deckel, positive Nickelelektroden und negative Kadmiumelektroden mit Kapazitätsüberschuss im Vergleich zu der Kapazität der Nickelelektroden, einen Separator und einen alkalischen Elektrolyt enthält. Der Akkumulator enthält auch eine aus Aktivkohle gebildete Sauerstoffelektrode, die mit der Kadmiumelektrode elektrisch gekoppelt ist, SU 143446.

Von dieser technischen Lösung geht die vorliegende Erfindung aus.

Die Vorrichtung erfordert im Unterschied zu den oben beschriebenen, ähnlichen Lösungen, keine zusätzlichen Gefäße zum Auffangen der abscheidenden Gase, was die Konstruktion einfacher und billiger macht.

Jedoch weist die Ausgangsvorrichtung eine Reihe von Nachteilen auf.

Da die Sauerstoffelektrode aus der Aktivkohle an dem Boden des Akkumulators angeordnet ist, wird bei der Erhöhung des Druckes in dem Akkumulator wegen der Abscheidung des Wasserstoffs und Sauerstoffs die Sauerstoffelektrode mit dem Elektrolyt überflutet, der Elektrolyt aus den Poren der Kadmium- und Nickelelektroden und des Separators herausgedrückt wird. Infolgedessen sinkt die Effizienz der Aufnahme des Sauerstoffs durch die A-Kohle-Elektrode, wodurch der Druck im Gefäß wesentlich höher wird, was die Notwendigkeit bedingt, ein Gefäß mit dicken Wänden herzustellen und dadurch die Abmessungen und dementsprechend auch die Kapazität des Akkumulators einschränkt. Die praktische Anwendung hat gezeigt, dass die Akkumulatoren, die nach diesem Vorbild ausgebildet sind, eine Kapazität von maximal 200 Ah. aufweisen. Außerdem ist der Kapazitätsvorrat der Kadmiumelektrode im Vergleich zu der Kapazität der Nickelelektrode nicht höher als 50 %. Infolgedessen kann man auf der Kadmiumelektrode das Abscheiden des Wasserstoffs beobachten, da das Gleichgewicht zwischen dem Strom zur Sauerstoffsaufnahme auf der Sauerstoffelektrode und dem Entladestrom der Kadmiumelektrode gestört wird; was zusätzlich den internen Widerstand in dem Gefäß erhöht.

### Erfindungsoffenbarung

Die Aufgabe der vorliegenden Erfindung ist es, die Effizienz der Sauerstoffaufnahme durch die Aktivkohle-Elektrode zu steigern und den internen Druck in dem Gefäß zu senken, was ermöglichen wird, die Kapazität des Akkumulators zu erhöhen; außerdem soll die Aufgabe der Verhinderung der Wasserstoffabscheidung auf der Kadmiumelektrode gelöst werden.

Erfindungsgemäß wird diese Aufgabe dadurch gelöst, dass ein dichter Nickel-Kadmium-Akkumulator ein Gefäß, einen Deckel, positive Nickelelektroden und negative Kadmiumelektroden mit einem Kapazitätsüberschuss im Vergleich zu der Kapazität der Nickelelektroden, einen Separator, einen alkalischen Elektrolyt und eine Sauerstoffelektrode aus Aktivkohle, die elektrisch mit der Kadmiumelektrode verbunden ist, aufweist; die Kadmiumelektrode ist in ihrer Länge aus zwei oder mehreren Teilen ausgebildet, dabei besteht jeder Teil aus zwei Platten, zwischen denen ein hydrophiler Faserwerkstoff angeordnet ist, und voneinander sind diese Teile durch Gitterelemente aus einem Elektroisolationsmaterial abgetrennt, die Dicke des hydrophilen Faserwerkstoffes beträgt 0,25 - 1,0, und die Dicke des Gitterelementes beträgt 1,0 - 4,0 von der Dicke der Platte des Sauerstoffelektrodenteils, dabei ist die Sauerstoffelektrode in dem oberen Teil des Akkumulators angeordnet und mit dem unteren Teil in den Elektrolyt auf 0,1 - 0,8 ihrer Höhe eingetaucht; die Kadmiumelektrode ist mit einem Kapazitätsüberschuss im Vergleich zu der Aufnahmefähigkeit der Nickelelektrode von 75 bis 100 % ausgebildet.

Der Antragsteller hat keine Quellen ausfindig machen können, welche die Informationen über technische Lösungen, die mit der vorliegenden Erfindung identisch sind, enthalten, was die Folgerung gestattet, dass diese dem Kriterium "Neuheit" (N) entspricht.

Da die Sauerstoffelektrode in ihrer Länge "L" aus zwei oder mehreren Teilen ausgebildet ist, und jede davon aus zwei Platten besteht, zwischen denen ein hydrophiler Faserwerkstoff angeordnet ist, und dabei diese Teile voneinander durch Gitterelemente aus dem Elektroisolationsmaterial abgetrennt sind, verbessert sich der Zugang des Sauerstoffs zu der Oberfläche des Kohleelementes beim vorhandenen Elektrolyt; dabei wird einerseits die aktive Oberfläche der Kohlenelektrode wesentlich vergrößert, und andererseits der Zugang des Sauerstoffs und des für die Reaktion notwendigen Elektrolyts zu der aktiven Oberfläche der Sauerstoffelektrode gewährleistet.

Der hydrophile Faserwerkstoff erfüllt die Funktion der Zulieferung des Elektrolyts zu der Oberfläche der Sauerstoffelektrode durch den Kapillareffekt und gewährleistet dadurch die Polarisierung der Elektrode. Bei der Dicke dieses Werkstoffes von weniger als 0,25 der Dicke der Platte des Sauerstoffelektrodenteils ist der Kapillareffekt schwach ausgebildet, deswegen erfolgt die Zulieferung der für die Reaktion notwendigen Elektrolytenmenge nicht. Bei einer Dicke des hydrophilen Faserwerkstoffes über 1,0 von der Dicke der oben genannten Platte verschwindet der Kapillareffekt, der Elektrolyt steigt entweder nicht zu den Plattenoberflächen oder fließt nach einem Aufstieg auf eine kleine Höhe wieder ab. Das Gitterelement ist für die Gewährleistung des Sauerstoffzuganges zu der aktiven Oberfläche der Sauerstoffelektrode bestimmt. Bei der Dicke des Gitterelementes von weniger als 1,0 von der Dicke der Platte des Sauerstoffelektrodenteils ist der Sauerstoffzugang wesentlich erschwert. Beträgt die Dicke über 4,0 von der Dicke dieser Platte, wird die Gesamtanzahl der Platten pro eine Volumeneinheit der Sauerstoffelektrode niedriger, und ihre aktive Oberfläche wird unzureichend für eine effektive Arbeit. Da die Sauerstoffelektrode in dem oberen Teil des Akkumulators angeordnet und mit dem unteren Teil in den Elektrolyt auf 0,1 - 0,8 ihrer Höhe eingetaucht ist, wird die Effizienz der Sauerstoffsaufnahme durch die Sauerstoffelektrode wesentlich erhöht, weil eine volle Überflutung dieser Elektrode bei der Erhöhung des Druckes in dem Akkumulator verhindert wird. Ist die Sauerstoffelektrode weniger als auf 0,1 ihrer Höhe eingetaucht, so wird sie mit der für ihre Polarisierung unzureichenden Elektrolytmenge kontaktieren, und wenn sie auf über 0,8 ihrer Höhe eingetaucht ist, wird die nicht überflutet gebliebene Oberfläche der Sauerstoffelektrode keinen minimal notwendigen Grad der Sauerstoffaufnahme sicherstellen.

Der Antragsteller hat keine Informationsquellen ausfindig machen können, welche die Angaben über die Unterscheidungsmerkmale der vorliegenden Erfindung und über das technische Ergebnis, das als Folge deren Umsetzung erreicht wird, enthalten. Die oben aufgeführte Analyse des Zusammenhangs dieser Merkmale mit dem zu erreichenden technischen Ergebnis gestattet nach Meinung des Antragstellers die Schlussfolgerung, dass die anzumeldende Erfindung dem Kriterium "Erfindungshöhe" (IS) entspricht.

### Kurze Beschreibung der Zeichnungen

Das Wesen der Erfindung wird anhand der Zeichnungen erklärt, dabei zeigen:

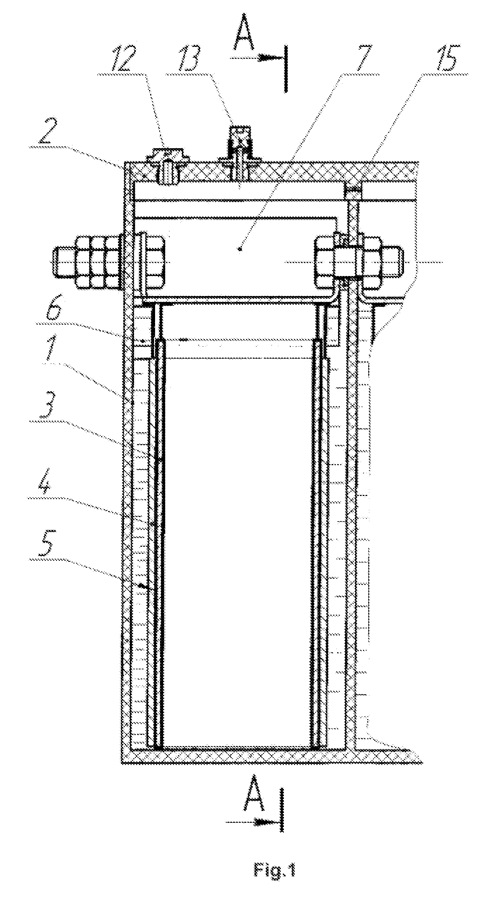

- Fig. 1: einen Längsschnitt der Vorrichtung;

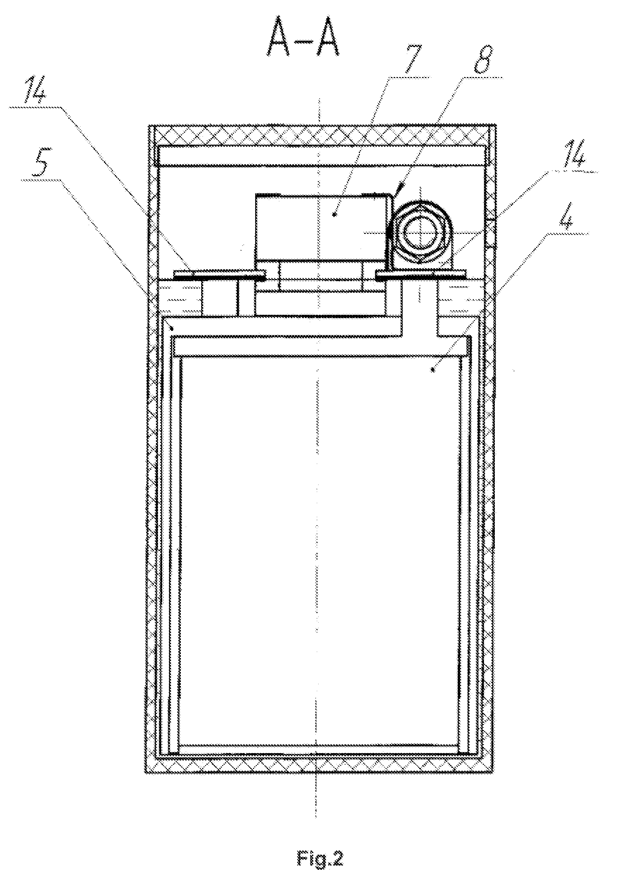

- Fig. 2: einen Schnitt A-A in der Fig.1;
- Fig. 3: eine Sauerstoffelektrode, Vorderansicht;
- Fig. 4: eine Sauerstoffelektrode, Draufsicht;
- Fig. 5: ein Sauerstoffelektrodenteil mit dem hydrophilen Faserwerkstoff zwischen den Platten und mit dem Gitterelement;

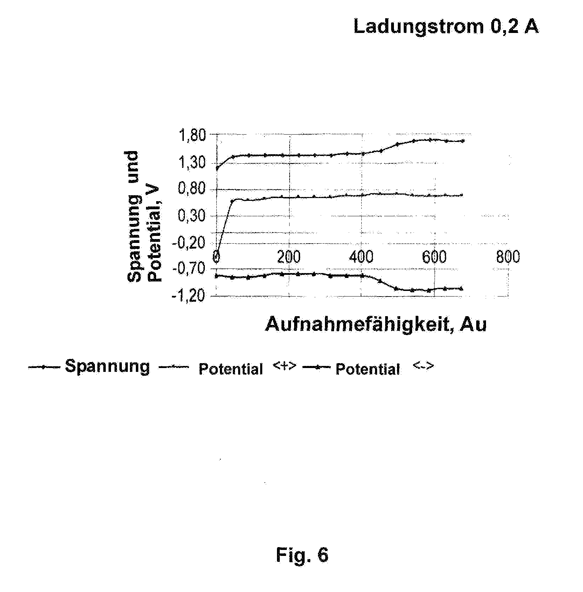

- Fig. 6: die Abhängigkeit der durchschnittlichen Spannung auf den Akkumulatoren und der Potenziale der Elektroden bei der Aufladung von der vermittelten Kapazität bis zur Abdichtung der Batterie und

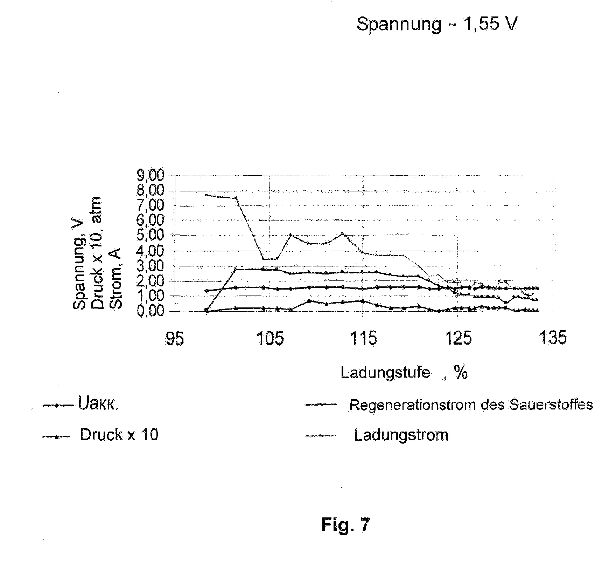

- Fig. 7: die Abhängigkeit der Spannung des abgedichteten Akkumulators, des internen Drucks und des Sauerstoffregenerationsstroms von dem Grad der Aufladung des Akkumulators bei konstanter Ladespannung pro einen Akkumulator von - 1,55 V.

### Bevorzugte Ausführung der Erfindung

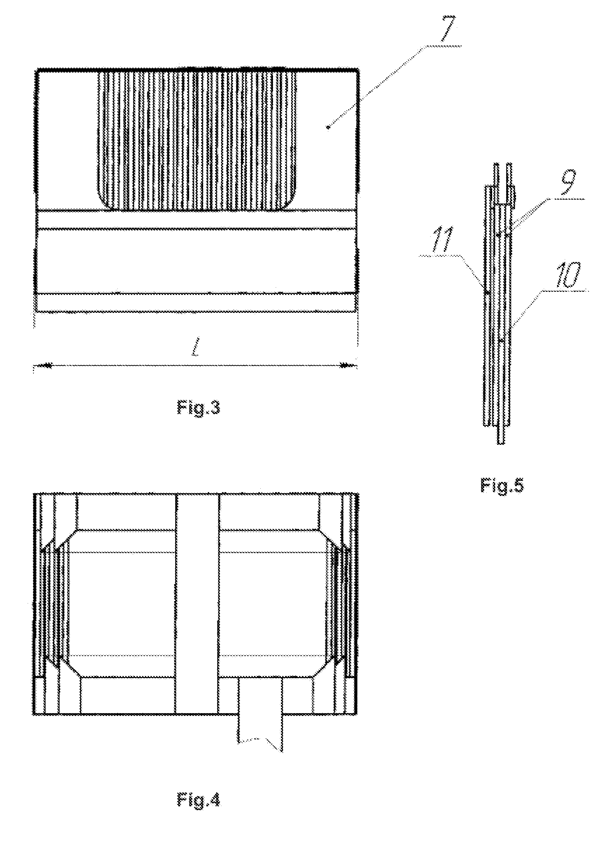

Der dichte Nickel-Kadmium-Akkumulator enthält ein Gefäß 1, einen Deckel 2, positive Nickelelektroden 3 und negative Kadmiumelektroden 4 mit einem Kapazitätsüberschuss im Vergleich zu der Kapazität der Elektroden 3. Ein Separator 5 trennt die Elektroden 3 und 4. In dem Gefäß befindet sich ein alkalischer Elektrolyt 6. Eine Sauerstoffelektrode 7 ist aus Aktivkohle hergestellt und elektrisch mit der Elektrode 4 mit Hilfe der Brücke 8 verbunden. Die Sauerstoffelektrode 7 ist in ihrer Länge "L" aus zwei oder mehreren Teilen ausgebildet. In dem betrachteten Beispiel besteht sie aus 40 gleichen Teilen. Jeder Teil (Fig. 5) besteht aus zwei Kohleplatten 9, zwischen denen ein hydrophiler Faserwerkstoff 10, insbesondere Polypropylen angeordnet ist; die Teile der Elektrode 7 sind voneinander mit Gitterelementen 11 aus einem Elektroisolationswerkstoff abgetrennt, in vorliegendem Beispiel aus dem Polyvinylchlorid. Die Dicke des Werkstoffes 10 beträgt in dem konkreten Beispiel 0,4 und die Dicke des Gitterelementes 2,0 von der Dicke der Kohleplatte 9. Die Sauerstoffelektrode 7 ist in dem oberen Teil des Akkumulators zwischen den Brücken 14 angeordnet und in den Elektrolyt 6 mit ihrem unteren Teil in dem vorliegenden Beispiel auf 0,3 ihrer Höhe eingetaucht. Die Kadmiumelektrode 4 ist in diesem konkreten Beispiel mit einem Kapazitätsüberschuss von 80 % im Vergleich zu der Kapazität der Nickelelektrode 3 ausgebildet. Der Deckel 2 ist mit den Trennwänden versehen, in denen die durchgehenden Bohrungen 15 ausgebildet sind, deren Fläche nicht mehr als 3 mm² ausmacht. Der Akkumulator ist mit einer Bohrung zur Auffüllung des Elektrolyts mit einem dichten Stopfen 12 und einem Gasventil 13 zur Reduzierung des Überdruckes unter Bedingungen einer außerordentlichen Notsituation (Steigerung der Ladespannung über den zulässigen Wert, Entweichen des Elektrolyts aus dem Akkumulator usw.) ausgestattet. Die elektrochemischen Prozesse in dem Nickel-Kadmium-Akkumulator, die während seiner Aufladung erfolgen, sind unten aufgeführt.

| **Sauerstoffelektrode 7** | **positive (Nickel-)** |
|---|---|
| | **Elektrode 3** |
| | |
| O₂ + 2H₂O + 4e = 4OH⁻ | Ni(OH)₂ + OH⁻+ e = NiOOH + H⁺ |
| O₂ + H₂O + 2e = OH⁻ + HO₂⁻ | 2H₂O + 4e = O₂ + 4H⁺ |
| | |

| | **negative (Kadmium-)** |
|---|---|
| | **Elektrode 4** |
| | |
| | Cd(OH)₂ + 2e = Cd + 2OH⁻ |
| | Cd + 4OH⁻ = 2Cd(OH)₂ + 4e |
| | Cd + O₂ = 2CdO + 2e |
| | CdO +H₂O = Cd(OH)ₙ |

Bei der Aufladung des Akkumulators und einer Aufnahme durch die Nickelelektrode 3 einer Kapazität von 100 % wird die Kadmiumelektrode bei der gleichen Menge der Ladungselektrizität nur auf 50 - 57 % geladen sein, was unzureichend ist, um das Potenzial für eine Wasserstoffabscheidung auf der Elektrode 4 zu erreichen. Der Sauerstoff, der während der Aufladung auf der Nickelelektrode abgeschieden wird, wird teilweise von der Kadmiumelektrode und teilweise von der Kohlenplatte 9 der Sauerstoffelektrode 7 aufgenommen, und die Elektronen der Sauerstoffelektrode 7 entladen die Kadmiumelektrode 4 durch die Brücke 8, welche die Sauerstoffelektrode 7 mit der Kadmiumelektrode 4 verbindet und dadurch die Kapazität und das Ladepotenzial der Elektrode 4 reduziert, und während der Aufladung es nicht zulässt, das Wasserstoffabscheidungs-Potenzial auf der Elektrode 4 zu erreichen.

Der elektrochemische Prozess des Sauerstoffaufsaugens durch die Kohlenplatten ist nur in dem Fall möglich, wenn es zwischen den Kohleplatten den Elektrolyt, der in den Separator-poren angeordnet ist, sowie ein Luftspiel für die Eindringung des Sauerstoffes von der Nickelelektrode auf die Oberfläche der Kohleplatte gibt. Deswegen versorgt der hydrophile Faserseparator 10 die Kohleplatte mit dem Elektrolyt des Akkumulators 6, und das Gitterelement 11 stellt die Möglichkeit der Durchdringung des Sauerstoffes, der durch die Elektrode 3 abgeschieden wird, zur Oberfläche der Kohleplatte 9 sicher.

Durch den Kapazitätsüberschuss der Kadmiumelektrode 4 im Vergleich zu der Kapazität der Nickelelektrode 3, eine gestreckte Oberfläche der Kohleplatten 9 der Sauerstoffelektrode 7, den Zugang des Elektrolyts 6 in den Zwischenelektrodenraum der Sauerstoffelektrode 7 durch das Wasseraufnahmevermögen des Faserwerkstoffes 10 und den Zugang des Sauerstoffs, der durch die Nickelelektrode 3 abgeschieden wird, zur Oberfläche der Kohleplatten 9 der Sauerstoffelektrode 7 durch das Gitterelemente 11, die Anordnung der Sauerstoffelektrode in dem oberen Teil des Akkumulators und ihre Eintauchung in den Elektrolyt mit ihrem unteren Teil kann man die Effizienz des Sauerstoffsaufnahme wesentlich erhöhen und den internen Druck in dem Gefäß 1 reduzieren. Dies stellt seinerseits eine Erhöhung der Kapazität des Akkumulators sicher.

### Gewerbliche Anwendbarkeit

Für die Umsetzung der Erfindung werden verbreitete Werkstoffe und gewöhnliche Anlagen verwendet, was, der Meinung des Anmelders nach, die Entsprechung der Erfindung dem Kriterium "Gewerbliche Anwendbarkeit" (IA) begründet.

## Patentansprüche

1. Dichter Nickel-Kadmium-Akkumulator, der ein Gefäß, einen Deckel, positive Nickelelektroden und negative Kadmiumelektroden mit einem Kapazitätsüberschuss im Vergleich zu der Kapazität der Nickelelektroden, einen Separator, einen alkalischen Elektrolyt und eine Sauerstoffelektrode aus Aktivkohle, die mit der Kadmiumelektrode elektrisch verbunden ist, aufweist, **dadurch gekennzeichnet, dass** die Sauerstoffelektrode in ihrer Länge "L" aus zwei oder mehreren Teilen ausgebildet ist, wobei jeder Teil aus zwei Kohleplatten besteht, zwischen denen ein hydrophiler Faserwerkstoff angeordnet ist und diese Teile voneinander mit Gitterelementen aus einem Elektroisolationswerkstoff abgetrennt sind, wobei die Dicke des hydrophilen Faserwerkstoffes 0,25 - 1,0 beträgt und die Dicke des Gitterelementes 1,0 - 4,0 von der Dicke der Platte des Sauerstoffelektrodenteiles beträgt, wobei die Sauerstoffelektrode in dem oberen Teil des Akkumulators angeordnet und in den Elektrolyt mit ihrem unteren Teil auf 0,1 - 0,8 ihrer Höhe eingetaucht ist.

2. Akkumulator nach Anspruch 1, **dadurch gekennzeichnet, dass** die Kadmiumelektrode mit einem Kapazitätsüberschuss von 75 bis 100 % im Vergleich zu der Kapazität der Nickelelektrode ausgebildet ist.
